# EUROPEAN PATENT APPLICATION

(11) **EP 4 840 348 A2**
(43) Date of publication of application: **18.11.2026**
(21) Application number: 26174080.7
(22) Date of filing: 22.04.2026
(51) Int. Cl.: A43B 13/16, A43B 13/18, B29D 35/00, B29D 35/12

(54) **METHODS FOR MANUFACTURING A COMPONENT FOR AN ARTICLE OF FOOTWEAR WITH RECYCLED MATERIAL**

(30) Priority: 24.04.2025 US 202519188655
(71) Applicant: PUMA SE, 91074 Herzogenaurach (DE)
(72) Inventor: Hartmann, Matthias, 91301 Forchheim (DE)
(74) Representative: Gosdin, Carstensen & Partner Patentanwälte Partnerschaftgesellschaft mbB

(57) **Abstract**

A method for manufacturing a recycled midsole member for an article of footwear is disclosed. The method includes foaming a polymer material, cutting the foamed polymer material, and recycling portions of the foamed polymer material to create a recycled midsole member. The midsole member includes a first portion and a second portion. The first portion defines a perimeter of the midsole member and is made of a first foam material. The second portion defines an interior of the midsole member and is made of a second foam material. The first and second foam materials of the midsole member comprise recycled foam material. In some embodiments, the recycled foam material is pieces of foamed material which have been molded together and define the first and second portions of the midsole member.

## Description

### BACKGROUND

### Field of the Disclosure

The present disclosure relates generally to manufacturing a portion of an article of footwear using a mold, and more particularly, a portion of a sole structure of an article of footwear.

### Description of Background

Generally, an article of footwear includes an upper defining an interior space that is configured to receive a foot of a user. A sole structure is typically attached to a lower end of the upper and extends between the upper and a support surface, e.g., the ground. As a result, the sole structure typically provides stability and cushioning to the user when the shoe is being worn and/or is in use. In some instances, the sole structure may include multiple components, such as an outsole, a midsole, and an insole. The outsole may provide traction along a bottom surface of the sole, and the midsole may be attached to an upper surface of the outsole to extend generally between the outsole and the upper.

In many cases, at least a portion of the sole structure, e.g., the midsole, can be a foam component that is formed using one or more molds. With conventional processes, such foam components are typically formed using either an injection molding process or a compression molding process. In an injection molding process, a liquid material, typically a polymeric material, is injected into a mold cavity and cured to form the foam component. In a compression molding process, a blank is placed in a mold and then heated to expand the blank within the mold to form the foam component. However, such conventional molding processes can limit performance characteristics of the molded component, for example, cushioning, elasticity, stability, density, and weight. Further, foam components can be produced using various manufacturing techniques (e.g., additive manufacturing, thermoforming, die cutting, laser cutting), some of which offer distinct advantages over traditional methods. These alternative techniques may enhance specific performance attributes or provide greater design flexibility, contributing to improved overall functionality and comfort.

In many cases, additional material is left behind once a foam component is manufactured to create a portion of the sole structure, e.g., the midsole. This additional material may be wasted and can increase manufacturing costs for foam components. Accordingly, there is a need to use the additional material to create components of an article of footwear including, without limitation, a portion of the sole structure, which may include a midsole.

### SUMMARY

A method for manufacturing a midsole member for an article of footwear includes, fabricating a polymer sheet to form a preformed component, positioning the preformed component within a cavity of an autoclave, saturating the preformed component with a supercritical fluid, dropping the pressure within the cavity of the autoclave to trigger foaming of the preformed component to form a foam component, removing the foam component from the autoclave, removing an outer layer of the foam component to provide the outer layer and a skinned foamed component, processing the skinned foamed component into pieces, providing a mold, processing the outer layer into one or more sections, placing the one or more sections of the outer layer into the perimeter of the mold, filling the remainder of the mold with one or more processed pieces of the skinned foam component, and molding the sections and pieces together to provide a midsole member for an article of footwear.

According to some aspects of the disclosure, a midsole member for an article of footwear includes a first portion and a second portion, wherein the first portion is positioned around the perimeter of the midsole member and includes a first foamed polymer material, wherein the first foamed material includes one or more sections of foam made through supercritical foaming, and wherein the second portion is positioned in-between the perimeter of the midsole member defined by the first portion and comprises a second foamed polymer material, wherein the second foamed material includes a plurality of pieces of foam made through supercritical foaming.

Other aspects of the articles of footwear or portions of the articles of footwear described herein, as well as methods of making the same, including features and advantages thereof, will become apparent to one of ordinary skill in the art upon examination of the figures and detailed description herein. Therefore, all such aspects of the articles of footwear are intended to be included in the detailed description and this summary.

### BRIEF DESCRIPTION OF THE DRAWINGS

FIG. 1 is a top and lateral perspective view of an article of footwear according to aspects of the present disclosure;
FIG. 2 is a lateral side view of the article of footwear of FIG. 1;
FIG. 3 is a medial side view of the article footwear of FIG. 1;
FIG. 4 is a top plan view of the article of footwear of FIG. 1;
FIG. 5 is a top plan view of the article of footwear of FIG. 1, with an upper removed and a user's skeletal foot structure overlaid on the article of footwear;
FIG. 6 is a bottom perspective view of a pair of midsole members according to aspects of the present disclosure;
FIG. 7 is a side, cross-sectional, schematic view of the midsole member of FIG. 6 along line 7-7 of FIG. 6;
FIG. 8 is a side perspective view of the pair of midsole members of FIG. 6;
FIG. 9 is a schematic view illustrating a method for manufacturing a midsole member;
FIG. 10 is a microscopic view of a recycled foam material; and
FIG. 11 is a microscopic view of a new, un-recycled foam material.

### DETAILED DESCRIPTION OF THE DRAWINGS

The following discussion and accompanying figures disclose various embodiments or configurations of a shoe. Although embodiments are disclosed with reference to a sports shoe, such as a running shoe, tennis shoe, basketball shoe, etc., concepts associated with embodiments of the shoe may be applied to a wide range of footwear and footwear styles, including basketball shoes, cross-training shoes, football shoes, golf shoes, hiking shoes, hiking boots, ski and snowboard boots, soccer shoes and cleats, walking shoes, and track cleats, for example. Concepts of the shoe may also be applied to articles of footwear that are considered non-athletic, including dress shoes, sandals, loafers, slippers, and heels. In addition to footwear, particular concepts described herein may also be applied and incorporated in other types of articles, including apparel or other athletic equipment, such as helmets, padding or protective pads, shin guards, and gloves. Even further, particular concepts described herein may be incorporated in cushions, backpacks, suitcases, backpack straps, golf clubs, or other consumer or industrial products. Accordingly, concepts described herein may be utilized in a variety of products.

The term "about," as used herein, refers to variation in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "near," "about," and "approximately" refer to a range of values ± 5% of the numeric value that the term precedes.

Further, as used herein, unless otherwise defined or limited, directional terms are used for convenience of reference for discussion of particular figures or examples. For example, references to "downward," or other directions, or "lower" or other positions, may be used to discuss aspects of a particular example or figure, but do not necessarily require similar orientation or geometry in all installations or configurations. The terms first, second, third, etc. may be used herein to describe various elements, components, regions, layers and/or sections. These elements, components, regions, layers and/or sections should not be limited by these terms. These terms may be only used to distinguish one element, component, region, layer, or section from another region, layer, or section. Terms such as "first," "second," and other numerical terms do not imply a sequence or order unless clearly indicated by the context. Thus, a first element, component, region, layer, or section discussed below could be termed a second element, component, region, layer, or section without departing from the teachings of the example configurations.

The present disclosure is directed to an article of footwear or specific components of the article of footwear, such as an upper or a sole or sole structure, and methods for making the same. The upper may comprise a knitted component, a woven textile, a non-woven textile, leather, mesh, suede, or a combination of one or more of the aforementioned materials. The knitted component may be made by knitting of yarn, the woven textile by weaving of yarn, and the non-woven textile by manufacture of a unitary non-woven web. Knitted textiles include textiles formed by way of warp knitting, weft knitting, flat knitting, circular knitting, or other suitable knitting operations. The knit textile may have a plain knit structure, a mesh knit structure, or a rib knit structure, for example. Woven textiles include, but are not limited to, textiles formed by way of any of the numerous weave forms, such as plain weave, twill weave, satin weave, dobbin weave, jacquard weave, double weaves, or double cloth weaves, for example. Non-woven textiles include textiles made by air-laid or spun-laid methods, for example. The upper may comprise a variety of materials, such as a first yarn, a second yarn, or a third yarn, which may have varying properties or varying visual characteristics.

In some embodiments, the upper may comprise an inner layer and an outer layer, which may provide a mixture of stretch and stability. The inner layer and the outer layer may be attached to one another by stitching, an adhesive, welding, or other connection methods as are known in the art. The inner layer may be made of material that allows the upper to stretch in multiple directions, for example, a 4-way stretch material, so that the upper is both snug and comfortable, and can conform to the foot of a user. In addition to providing the upper with a layer that is flexible and can better conform to a foot of a user, the inner layer may provide for a more comfortable upper that reduces friction or other rubbing between the foot of a user and the upper. The outer layer is made from a resilient woven material, which may resist stretching.

In some cases, the upper may further include a heel cup coupled to and substantially surrounding the heel of a user. The heel cup is a rigid or semi-rigid structure that may provide additional support for the foot of a user. The heel cup may be made of a plastic, for example, TPU, or a composite material. In some cases, the heel cup is transparent or translucent.

In addition, the present disclosure relates to an article of footwear having a sole structure attached to the upper. The sole structure includes a midsole that may be attached to the upper, an outsole attached below the midsole and defining a bottom of the article of footwear, and a number of sole elements. In some embodiments, the midsole and the outsole may be a unitary body made from a foam or a rubber material, which cushion the user's foot as it impacts the ground and gives the user traction. In other embodiments, the midsole and the outsole may constitute different components which may be co-molded or adhered together by a glue or other adhesive. The midsole may be a foamed thermoplastic element that provides cushioning for a user. As a few particular examples, the midsole may be made from one or more thermoplastic materials, such as thermoplastic polyurethane, ethylene-vinyl acetate, nylon, nylon polyamide, thermoplastic elastomer, thermoplastic polyamide, etc. In some cases, a midsole can include other types of materials, including non-thermoplastic materials. The outsole may be a rubber material to increase traction and durability. In some cases, the midsole can be a multi-density midsole with two or more layers having different densities to provide tuned cushioning characteristics. Additionally, the outsole may be formed from one or more outsole sections, which can be received within a corresponding recess formed in a bottom of the midsole.

In some embodiments, a portion of the sole structure may include a polymer sheet. In some embodiments, the one or more polymer sheets can be foamed to form the midsole of the sole structure through various foaming methods (e.g., injection molding, compression molding, supercritical foaming).

In some cases, a portion of the sole structure may be made from one or more thermoplastic materials. In some cases, the midsole member can include a first portion and a second portion. In some cases, the first portion and second portion are molded together. In some embodiments, the first portion includes a first side and a second side. In some cases, the first side of the first portion is an external side, and the second side of the first portion is an internal side. In some embodiments, the first portion is made from a first material. In some cases, the first material is a first foam material. In some cases, the first foam material is a polymer material formed through supercritical foaming. In some embodiments, the first foam material includes a closed-cell structure on the first side of the first portion and an open-cell structure on the second side of the first portion. In some cases, the second portion is made from a second material. In some cases, the second material is a second foam material. In some cases, the second foam material is a polymer material formed through supercritical foaming. In some embodiments, the second foam material is created from a plurality of fragments, scraps, chips, or pieces of a polymer sheet formed through supercritical foaming that have been molded together. In some cases, the plurality of pieces comprising the second foam material include an open-cell structure.

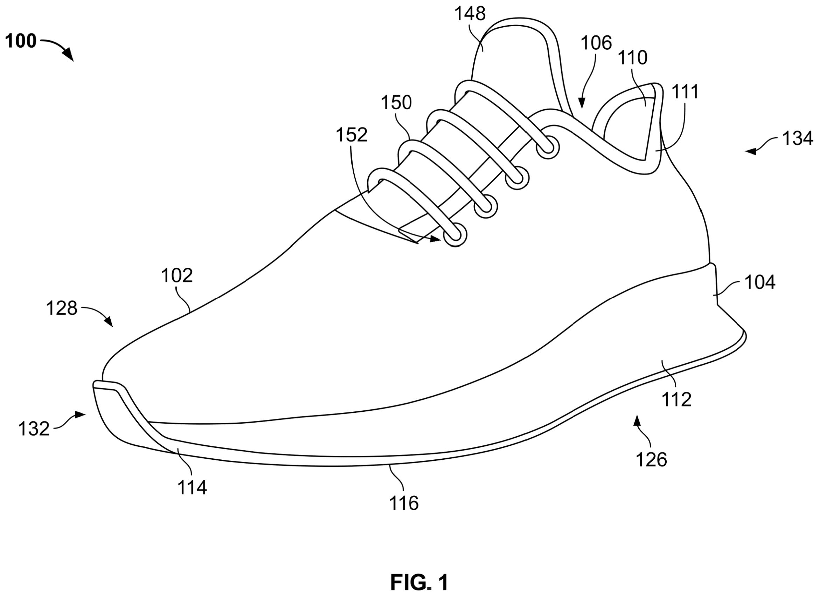

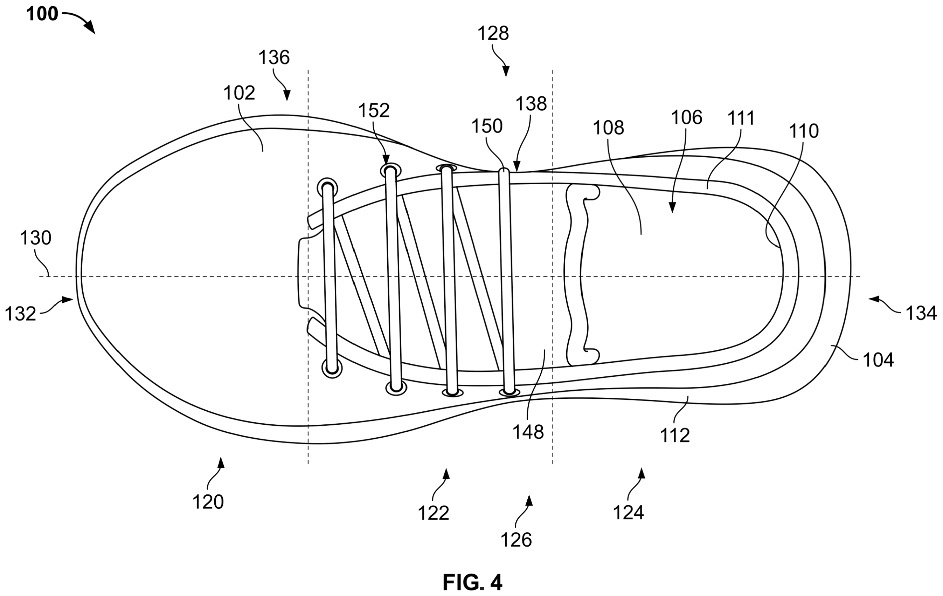

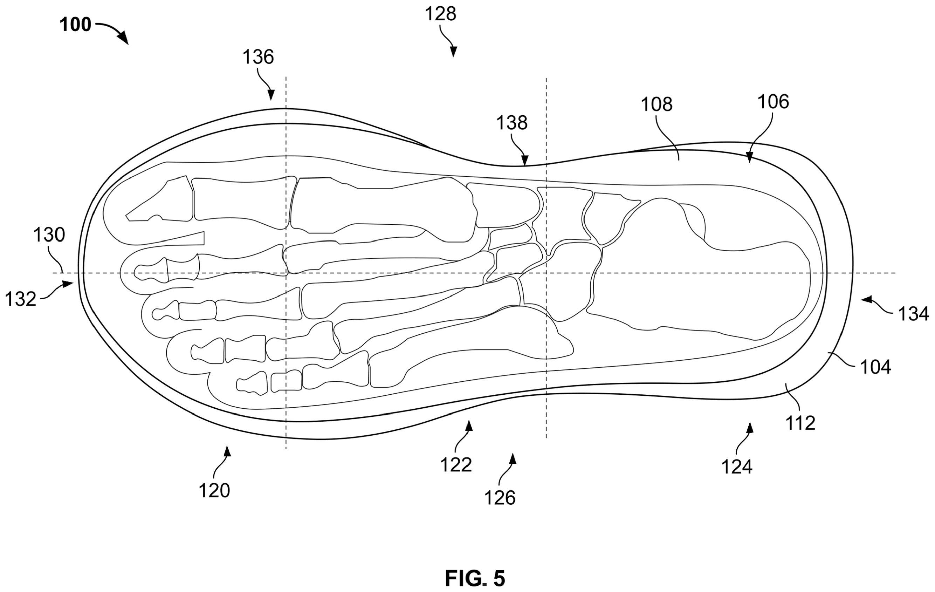

Referring now to the figures, FIGS. 1-5 depict an exemplary embodiment of an article of footwear 100 including an upper 102 and a sole structure 104. As will be discussed in further detail below, the upper 102 is coupled with the sole structure 104 and together with the sole structure 104 defines an interior cavity 106 (*see* FIG. 4) into which a foot of a user may be inserted. The upper 102 may also include an insole 108 (*see* FIG. 4) positioned within the interior cavity 106 that may be connected to or in contact with an interior surface of the article of footwear 100. The insole 108 may directly contact a user's foot while the article of footwear 100 is being worn. In some embodiments, an upper may include a liner 110 that makes the article of footwear 100 more comfortable to wear, for example, by reducing friction between the foot of the user and the article of footwear 100 when the article of footwear 100 is being worn, or providing moisture wicking properties. The liner 110 may line the entire interior cavity 106 or only a portion of the interior cavity 106. In other embodiments, a collar or binding 111 may surround the opening of the interior cavity 106 to secure the liner 110 to the upper 102 or to provide an aesthetic element on the article of footwear 100. Furthermore, the sole structure 104 includes a midsole 112 and an outsole 114 coupled to and disposed generally below the midsole 112. The outsole 114 defines a bottom surface 116 of the article of footwear 100 that is configured to contact the ground. In some embodiments, lugs (not shown) or other tractive elements may be provided along the bottom surface 116 to provide a user with increased traction.

The article of footwear 100 generally defines a forefoot region 120, a midfoot region 122, and a heel region 124. The forefoot region 120 generally corresponds with portions of the article of footwear 100 that encase portions of the foot that include the toes, the ball of the foot, and joints connecting the metatarsals with the toes or phalanges. The midfoot region 122 is proximate and adjoining the forefoot region 120, and generally corresponds with portions of the article of footwear 100 that encase the arch of a foot, along with the bridge of a foot. The heel region 124 is proximate and adjoining the midfoot region 122 and generally corresponds with portions of the article of footwear 100 that encase rear portions of the foot, including the heel or calcaneus bone, the ankle, or the Achilles tendon.

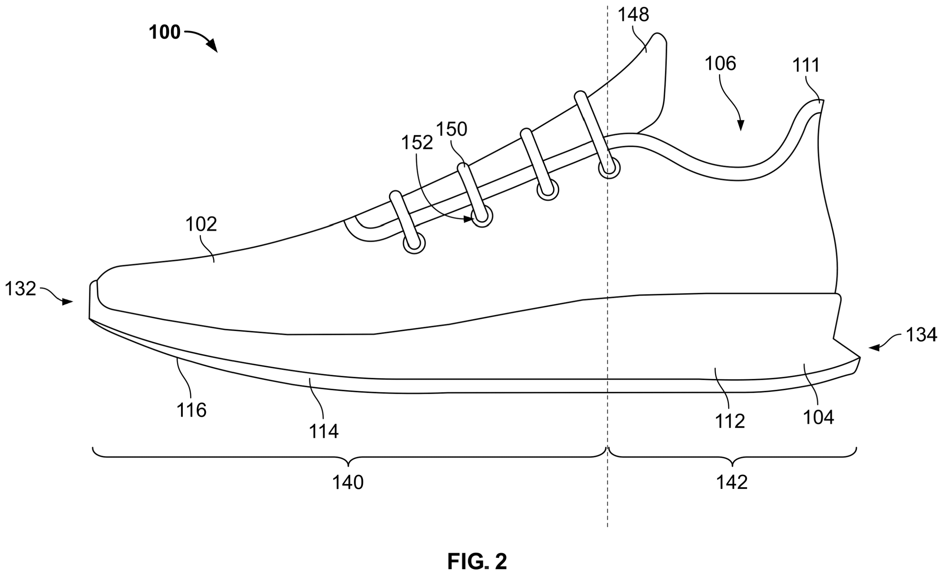

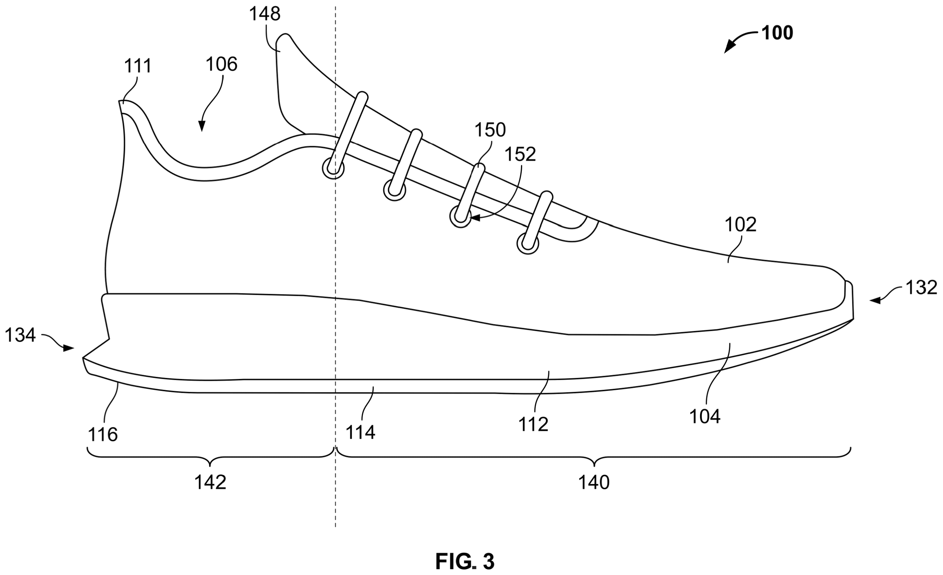

The article of footwear 100 also defines a lateral side 126 *(see* FIG. 2), and a medial side 128 *(see* FIG. 3). Further, the article of footwear 100 defines a longitudinal axis 130 *(see* FIG. 3) that extends from a toe end 132, located at a distal end of the forefoot region 120, to a heel end 134, located at a distal end of the heel region 124 opposite the toe end 132. The longitudinal axis 130 defines a middle of the article of footwear 100 with the lateral side 126 extending from one side of the longitudinal axis 130 and the medial side 128 extending from the other. Put another way, the lateral side 126 and the medial side 128 adjoin one another along the longitudinal axis 130. In particular, the lateral side 126 corresponds to an outside portion of the article of footwear 100 and the medial side 128 corresponds to an inside portion of the article of footwear 100. As such, left and right articles of footwear have opposing lateral 126 and medial 128 sides, such that the medial sides 128 are closest to one another when a user is wearing the article of footwear 100, while the lateral sides 126 are defined as the sides that are farthest from one another while being worn.

The forefoot region 120, the midfoot region 122, the heel region 124, the medial side 128, and the lateral side 126 are intended to define boundaries or areas of the article of footwear 100, and collectively span an entire length of the article of footwear 100, from the toe end 132 to the heel end 134. It should be appreciated that aspects of the disclosure may refer to portions or elements that are coextensive with one or more of the forefoot region 120, the midfoot region 122, the heel region 124, the medial side 128, or the lateral side 126. The forefoot region 120 extends from the toe end 132 to a widest portion 136 of the article of footwear 100, *i.e*., a distance between the medial side 128 and the lateral side 126 of the sole structure 104. The midfoot region 122 extends from the widest portion 136 to a thinnest portion 138 of the article of footwear 100, *i.e.,* a distance between the medial side 128 and the lateral side 126 of the sole structure 104. The heel region 124 extends from the thinnest portion 138 to the heel end 134 of the article of footwear 100.

The lateral side 126 begins where the toe end 132 intersects the longitudinal axis 130 and bows outward, *i.e.,* away from the longitudinal axis 130, along the forefoot region 120 toward the midfoot region 122. At the widest portion 136, the lateral side 126 bows inward, *i.e.,* toward the longitudinal axis 130 and toward the thinnest portion 138, entering the midfoot region 122. Upon reaching the thinnest portion 138, the lateral side 126 bows outward and extends into the heel region 124. The lateral side 126 then bows back inward toward the heel end 134 and terminates where the heel end 134 intersects with the longitudinal axis 130.

The medial side 128 begins where the toe end 132 intersects the longitudinal axis 130 and bows outward, *i.e.,* away from the longitudinal axis 130, along the forefoot region 120 toward the midfoot region 122. At the widest portion 136, the medial side 128 bows inward, *i.e.,* toward the longitudinal axis 130, toward the thinnest portion 138, entering the midfoot region 122. Upon reaching the thinnest portion 138, the medial side 128 bows outward and extends into the heel region 124. The medial side 128 then bows back inward toward the heel end 134 and terminates where the heel end 134 intersects with the longitudinal axis 130.

It should be understood that numerous modifications may be apparent to those skilled in the art in view of the foregoing description, and individual components thereof, may be incorporated into numerous articles of footwear. Accordingly, aspects of the article of footwear 100 and components thereof, may be described with reference to general areas or portions of the article of footwear 100, with an understanding that the boundaries of the forefoot region 120, the midfoot region 122, the heel region 124, the lateral side 126, and/or the medial side 128 as described herein may vary between articles of footwear. Furthermore, aspects of the article of footwear and individual components thereof, may also be described with reference to exact areas or portions of the article of footwear 100 and the scope of the appended claims herein may incorporate the limitations associated with these boundaries of the forefoot region 120, the midfoot region 122, the heel region 124, the lateral side 126, and/or the medial side 128 discussed herein.

With continued reference to FIGS. 1-5, an upper is configured to at least partially enclose the foot of a user and may be made from one or more materials. In the illustrated embodiment, the upper 102 is disposed above and is coupled to the sole structure 104, and defines the interior cavity 106 that receives and secures a foot of a user. The upper 102 may be defined by a foot region 140 and an ankle region 142. In general, the foot region 140 extends upwardly from the sole structure 104 and through the forefoot region 120 and the midfoot region 122, and, in some embodiments, into the heel region 124. The ankle region 142 is primarily located in the heel region 124; however, in some embodiments, the ankle region 142 may partially extend into the midfoot region 122.

The upper 102 extends along the entirety of each of the medial 128 and lateral 126 sides, as well as extending over the top of the forefoot region 120 and around the heel region 124. An upper can be formed from one or more layers. For example, many conventional uppers are formed from multiple elements, *e.g.,* textiles, polymer foam, polymer sheets, leather, and synthetic leather, that are joined through bonding or stitching at a seam. In various embodiments, a knitted component may incorporate various types of yarn that may provide different properties to an upper. In other embodiments, the upper may incorporate multiple layers of different materials, each having different properties, for example, increased breathability or moisture wicking.

With reference to the material(s) that comprise the upper 102, the specific properties that a particular type of yarn will impart to an area of a knitted component may at least partially depend upon the materials that form the various filaments and fibers of the yarn. For example, cotton may provide a soft effect, biodegradability, or a natural aesthetic to a knitted material. Elastane and stretch polyester may each provide a knitted component with a desired elasticity and recovery. Rayon may provide a high luster and moisture absorbent material, wool may provide a material with an increased moisture absorbance, nylon may be a durable material that is abrasion-resistant, and polyester may provide a hydrophobic, durable material.

Other aspects of a knitted component may also be varied to affect the properties of the knitted component and provide desired attributes. For example, a yarn forming a knitted component may include monofilament yarn or multifilament yarn, or the yarn may include filaments that are each formed of two or more different materials. In addition, a knitted component may be formed using a particular knitting process to impart an area of a knitted component with particular properties. Accordingly, both the materials forming the yarn and other aspects of the yarn may be selected to impart a variety of properties to particular areas of the upper 102.

A number of other features may also be coupled to or included in an upper to provide or enhance certain properties of the upper. For example, the upper 102 can include a tongue 148 that may further include a tongue lining and/or a foam pad to increase comfort. The tongue 148 may be a separate component that is attached to the upper 102 or it may be integrally formed with one or more layers of the upper 102. Additionally, the upper 102 can also include a tensioning system, *e.g.,* laces 150, that allows a user to adjust the upper to fit a foot of a user. The tensioning system can extend through a midfoot region and/or a forefoot region of the upper and may be attached to the upper by an attachment structure. For example, in the illustrated embodiment, the upper 102 includes a plurality of holes 152, *e.g.,* punch holes or eyelets, that are configured to slidably receive the laces 150 so that the user can secure the article of footwear 100 to a foot, *e.g.,* by tightening and tying the laces 150. In other embodiments, a tensioning system may be a laceless fastening system, or other type of tensioning system known in the art.

Further, in some instances, other elements, *e.g.,* plastic material, logos, trademarks, etc., may also be applied and fixed to an exterior surface of the upper 102 using glue or a thermoforming process. In some embodiments, the properties associated with the upper 102, *e.g.,* a stitch type, a yarn type, or characteristics associated with different stitch types or yarn types, such as elasticity, aesthetic appearance, thickness, air permeability, or scuff-resistance, may be varied.

With continued reference to FIGS. 1-5, the upper 102 is joined with the sole structure 104, which extends between the upper 102 and the ground. The sole structure 104 includes the midsole 112 and the outsole 114. In other embodiments, a sole structure may also include one or more other components, which may include a lasting board, a plate, or a strobel board (not shown), that are disposed between a midsole and an upper. Additionally, in some cases, a sole structure can further include a heel cup that couples with the upper in the heel region via an adhesive or stitching and provides additional support to a heel of a user. More specifically, a heel cup may be made from a rigid or semi-rigid material, for example TPU or a composite that allows the heel cup to flex or give as needed when a user is running or engaging in other activities, but otherwise provide more rigid support to the heel of a user. In some embodiments, a heel cup can be made of a translucent or clear TPU and may be used to enhance aesthetic appeal of the shoe.

The midsole 112 is defined as the portion of the sole structure 104 that extends between the upper 102 and the outsole 114. That is, the midsole 112 can be coupled with the upper 102, *e.g.,* via the insole 108, at an upper surface of the midsole 112 and can be coupled with the outsole 114 on a lower surface of the midsole 112, opposite the upper 102. The midsole 112 extends along the length of the sole structure 104, throughout the forefoot region 120, the midfoot region 122, and the heel region 124. Additionally, the midsole 112 extends across the width of the sole structure 104 from a lateral side 126 to a medial side 128. However, in other embodiments, a midsole may include discrete midsole portions that only extend through portions of any of the forefoot region 120, the midfoot region 122, and the heel region 124.

The midsole 112 acts to cushion a user from the impact caused by the user's foot striking the ground. Put another way, the midsole 112 absorbs the impact resulting from a foot of a user coming into contact with the ground. To provide the desired cushioning characteristics, the thickness of the midsole 112, *e.g.,* a dimension taken along a direction that is normal to the bottom surface 116, can be varied, with thicker regions providing greater cushioning and stability, *e.g.,* the heel region 124 and thinner regions providing lesser cushioning and greater flexibility, *e.g.,* the forefoot region 120.

The outsole 114 is defined as a portion of the sole structure 104 that at least partially contacts an exterior surface, *e.g.,* the ground, when the article of footwear 100 is worn. Like the midsole 112, the outsole 114 can extend along the length of the sole structure 104, throughout the forefoot region 120, the midfoot region 122, and the heel region 124, and across the width of the sole structure 104 from a lateral side 126 to a medial side 128. However, in other embodiments, an outsole may include discrete outsole portions that only extend through portions of any of the forefoot region 120, the midfoot region 122, and the heel region 124.

In some embodiments, the midsole 112 may be fabricated from a molded thermoplastic material, *e.g.,* thermoplastic polyurethane, EVA, polyolefin elastomer, a rubber material, or mixtures thereof, which can resist wear resulting from contact with the ground in addition to increasing traction.

The term "foaming" or "foamed" discussed below refers to a process of creating a lightweight cushioning material by incorporating gas bubbles into a polymer or foam material to enhance the comfort, flexibility, and energy absorption (*e.g.,* shock) of a sole structure, particularly, a midsole portion. In particular, the foaming may include a preformed component (*e.g.,* a component prior to foaming) that can be expanded to create a foam component. In particular, the foaming discussed below is directed to foaming of one or more polymer sheets.

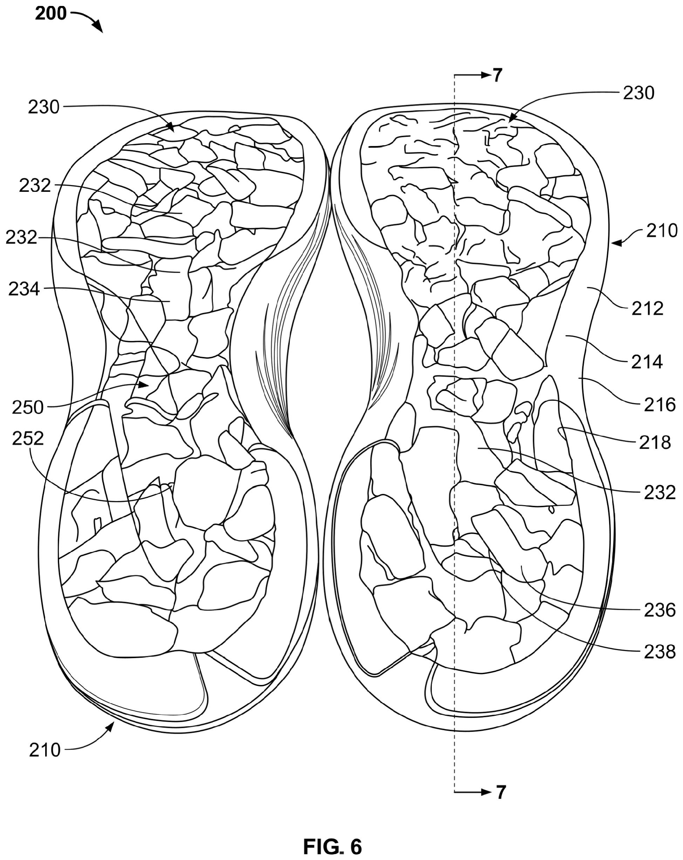

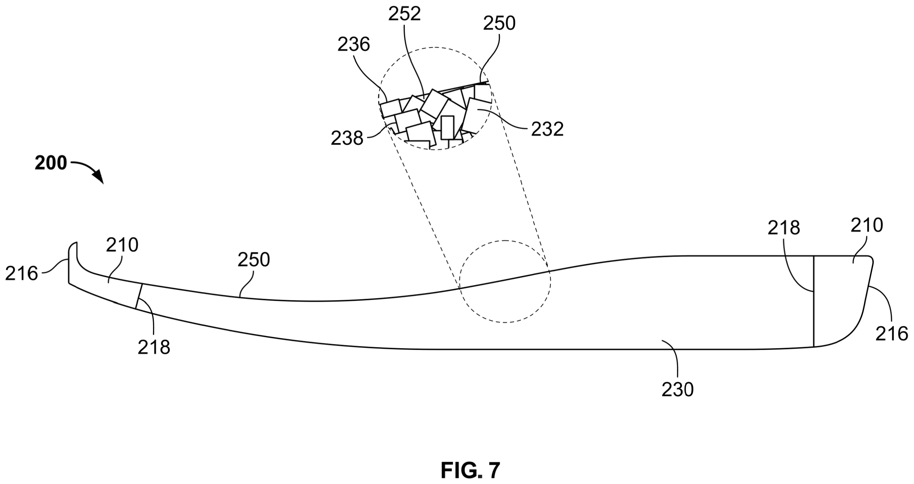

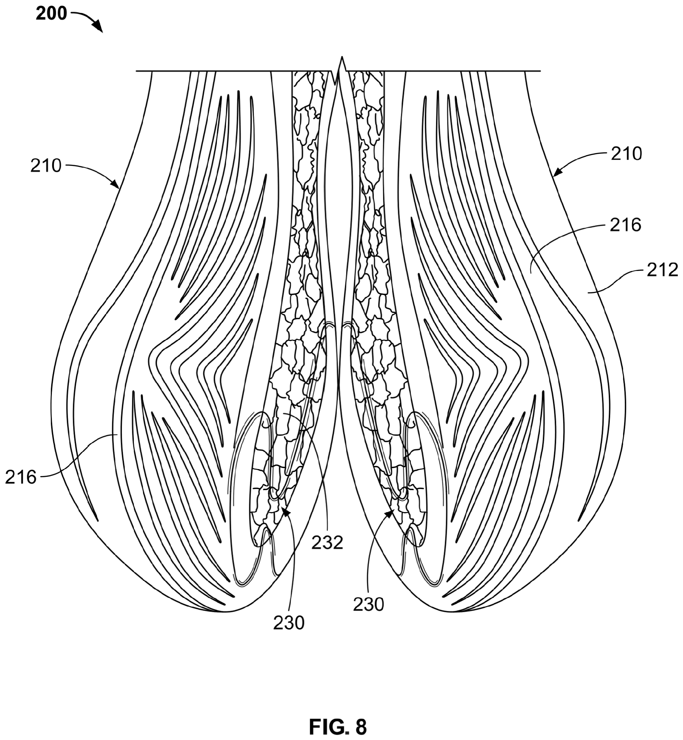

FIGS. 6-8 illustrate an embodiment of a midsole member 200 according to the present disclosure. The midsole member 200 is an embodiment of the midsole 112, as discussed herein. The midsole member 200 includes a first portion 210 and a second portion 230.

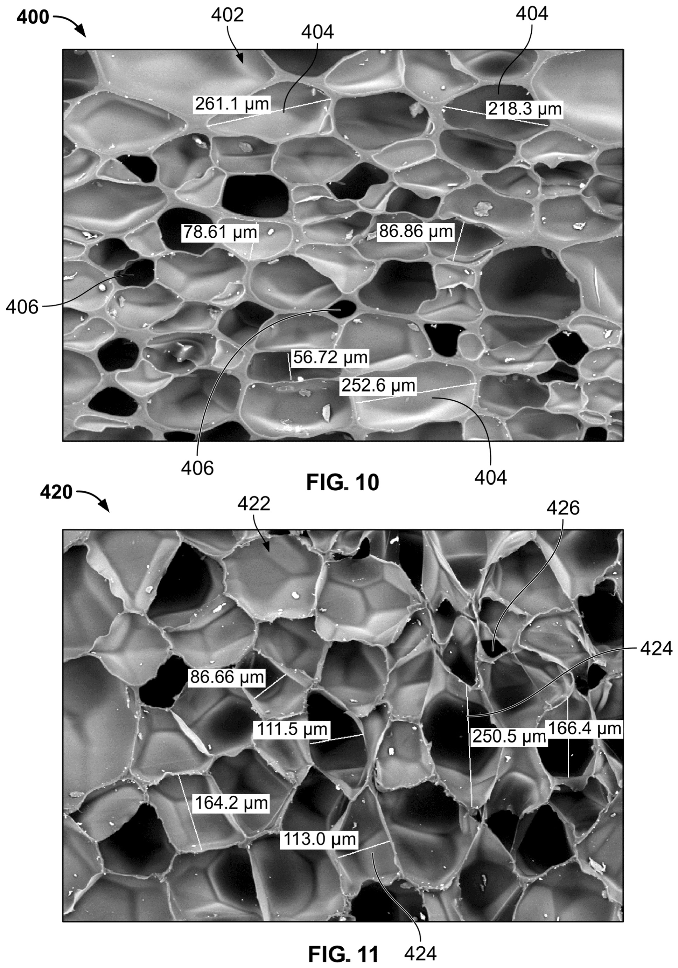

The first portion 210 is made of a section 212 of a first material 214. In some embodiments, the first material 214 comprises a foam material made through supercritical foaming. In some embodiments, the section 212 can be a plurality of sections that have been molded or combined together. The first portion 210 includes a first side 216 and a second side 218. In some embodiments, the first side 216 of the first portion 210 is an external side of the first portion 210, which includes a closed-cell foam structure. In some embodiments, the second side 218 of the first portion 210 is an internal side of the first portion 210 which includes an open-cell foam structure, as shown in FIGS. 10 and 11. In other embodiments, the first side 216 and the second side 218 of the first portion 210 can both include an open-cell foam structure.

The second portion 230 is made of one or more pieces 232 of a second material 234. In some embodiments, the second material 234 comprises a foam material made through supercritical foaming. In some embodiments, the pieces 232 have been molded together to form second portion 230. The pieces 232 may include an external face 236 and an internal face 238. In some embodiments, the external face 236 of the pieces 232 can have an open-cell foam structure, as shown in FIGS. 10 and 11.

Before being molded together into the second portion 230, the pieces 232 of the second material 234 may have an average particle size of about 0.2 cm³ to about 10 cm³. In some embodiments the pieces 232 have an average particle size of about 0.5 cm³ to about 3.0 cm³.

Forming the second portion 230 out of the pieces 232 having a particle size greater than 20x20x20 mm can cause the second portion 230 to have an inhomogeneous distribution.

In some embodiments, the midsole member further comprises a forefoot region, a midfoot region, and a heel region. In some embodiments, the average particle size of the pieces 232 of the second portion 230 are different between one or more of the forefoot, midfoot, and heel regions of the midsole member to provide a midsole with desirable energy characteristics.

The external surface 250 of second portion 230 can have recesses 252. In some embodiments, recesses 252 have an average depth of about 0.1 mm to about 5 mm. In some embodiments, recesses 252 have an average depth of about 0.1 mm to about 1 mm. In some embodiments, recesses 252 have an average depth of about 1 mm to about 2 mm. In some embodiments, recesses 252 have an average depth of about 2 mm to about 3 mm. In some embodiments, recesses 252 have an average depth of about 3 mm to about 4 mm. In some embodiments, recesses 252 have an average depth of about 4 mm to about 5 mm. In some embodiments, recesses 252 have an average depth of greater than about 5 mm.

In some embodiments, the first material 214 and the second material 234 can be made of the same foam material. In some embodiments, the first material 214 and the second material 234 are made of a foam material formed through supercritical foaming. In some embodiments, the first material 214 and the second material 234 are made through other foaming methods (e.g., injection molding or compression molding).

In some embodiments, the first material 214 and the second material 234 can be colored. In some embodiments, the first material 214 and the second material 234 can be multi-colored.

In some embodiments, the midsole member 200 has an ASKER C hardness of less than about 20. In some embodiments, the midsole member 200 has an ASKER C hardness of about 20 to about 40. In some embodiments, the midsole member 200 has an ASKER C hardness of about 20 to about 25. In some embodiments, the midsole member 200 has an ASKER C hardness of about 25 to about 30. In some embodiments, the midsole member 200 has an ASKER C hardness of about 30 to about 35. In some embodiments, the midsole member 200 has an ASKER C hardness of about 35 to about 40. In some embodiments, the midsole member 200 has an ASKER C hardness of greater than about 40. In some embodiments, the midsole member 200 has an ASKER C hardness of about 25 to about 35.

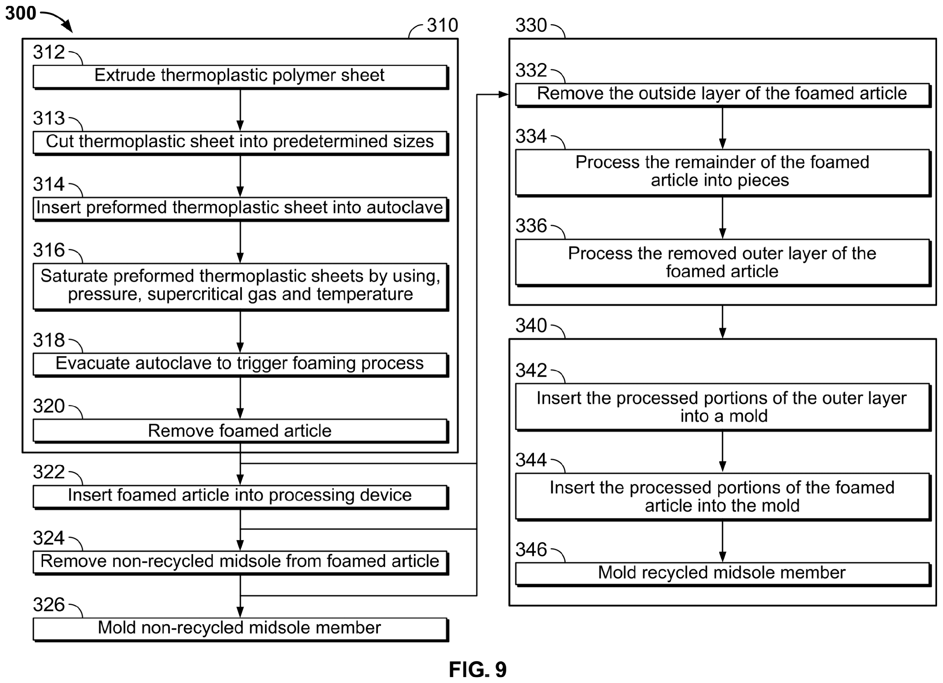

FIG. 9 illustrates a method 300 for manufacturing a foam component for a sole structure, *e.g.,* a midsole, or another portion of an article of footwear. While the method 300 is described below with reference to various steps and phases, it is appreciated that not all steps and phases may be required. Further, the steps and phases may not be carried out in the order presented below, and some steps and phases may be performed simultaneously. In some embodiments, the foam component may be an aliphatic foam component. In some embodiments, the foam component may be an aromatic foam component.

The method 300 may include, without limitation, a foam formation phase 310, a recycled foam preparation phase 330, and a recycled foam molding phase 340.

The foam formation phase 310 of method 300 may initiate at step 312 by heating polymer material (e.g., polymer pellets) in an extruder to a molten state. In some cases, the molten polymer can include a single material or can include multiple materials. For example, the molten polymer may include thermoplastic polyurethane (TPU), polyether block amide (PEBA), thermoplastic polyether block amide (TPEA), ethylene-vinyl acetate (EVA), nylon, nylon polyamide, thermoplastic polyester elastomer (TPEE), thermoplastic polyamide, polyolefin elastomer (POE), etc., or combinations thereof. In some embodiments, the molten polymer can be 100% TPU or 100% PEBA. Various manufacturing processes such as extrusion, calendaring, thermoforming, or compression molding can be used to form a polymer sheet from the molten polymer. At a step 313, the extruded polymer sheet can be cut or processed into a preformed component of a predetermined or desirable size.

The foaming process can begin by placing the preformed component into a cavity of an autoclave at step 314. The cavity of the autoclave has a volume that is larger than that of the preformed component, such that the preformed component only contacts a support surface, *e.g.,* a bottom surface, of the autoclave upon which the preformed component is placed. Accordingly, in some cases, the autoclave can be sized to accept a plurality of preformed components, which can be expanded simultaneously. Further, while a mold release agent can be applied to the cavity before placing the preformed component in the cavity, the application of a mold release agent is not required since the preformed component is not compressed by and in contact with the walls of the cavity. By not including the mold release agent, process complexity and cycle time is reduced, and bonding between the foam component and other components, at later steps, can be improved, e.g., where the foam component is a midsole, between the midsole and an outsole, and between the midsole and an upper.

With the preformed component in the autoclave, the autoclave can then be pressurized. As will be described in greater detail below, the pressure is selected to achieve a desired expansion of a supercritical fluid that is introduced into the autoclave and absorbed by the preformed component, resulting from releasing the pressure. Additionally, it is also possible that the particular pressure can be selected in accordance with a blowing agent used in later steps, such that the blowing agent is a supercritical fluid within the autoclave. For example, the pressure within the cavity of the autoclave can be increased from a first or initial pressure, e.g., atmospheric pressure, to a second or maximum pressure. In some embodiments, the second pressure can be between about 5 megapascals (MPa) and about 35 MPa above the initial pressure, or more specifically, between about 10 MPa and about 30 MPa, between about 11 MPa and about 28 MPa, between about 13 MPa and about 28 MPa, between about 18 MPa and about 28 MPa, between about 15 MPa and about 28 MPa, or between about 15 MPa and about 20 MPa. In other embodiments, the second pressure can be less than about 10 MPa or greater than about 30 MPa.

The autoclave can be heated to increase the temperature of the preformed component to near or above a glass transition temperature of a material of the preformed component, such that the preformed component may be in an at least partially molten state. Where the preformed component is made of one or more materials, the temperature may be near or above a glass transition temperature of any or all of the one or more materials. For example, in some cases the autoclave can be heated to between about 115 Celsius (C) and about 180 C, or more or less depending on the specific material being expanded. More specifically, the autoclave can be heated to be between about 120 C and about 160 C, between about 120 C and about 150 C, or between about 120 C and about 135 C.

The specific pressure and temperature combination achieved can be selected to allow for a blowing agent, *e.g.,* nitrogen, carbon dioxide, or another gas or combination of gases, to attain a supercritical state. In the supercritical state, the blowing agent does not exist in a distinct liquid or gaseous state of matter and is also not a solid. Additionally, the specific temperature can be selected to reduce curing or dwell time at later steps. For example, thicker components may require higher temperatures than thinner parts in order to achieve similar cure times, or dwell times for a desired amount of saturation.

A supercritical fluid, *i.e.,* a blowing agent, can be injected into the cavity of the autoclave at step 316. The supercritical fluid can be injected as a gas that then transitions to the super critical fluid, or a supercritical fluid can be injected directly into the autoclave. The supercritical fluid is preferably nitrogen gas (N₂), but can also be another type of fluid, for example, carbon dioxide gas (CO₂), or mixtures thereof. The supercritical fluid is held within the cavity of the autoclave for a predetermined period of time, *e.g.,* a soak or dwell time, to allow the supercritical fluid to be absorbed by the preformed component such that the preformed component becomes (fully) saturated with the supercritical fluid. For example, the dwell time in some embodiments can range between about 90 minutes and about 240 minutes, between about 90 minutes and about 180 minutes, between about 120 minutes and about 240 minutes, between about 120 minutes and about 180 minutes, between about 100 minutes and about 180 minutes, or less than about 90 minutes, or more than about 180 minutes. The specific dwell time required to allow the supercritical fluid to penetrate and saturate the preformed component may vary depending on any of the pressure and temperature within the autoclave, size of the preformed component, and the material of the preformed component. In some embodiments, the dwell time can be selected to achieve partial saturation or full saturation of the preformed component.

After saturating the preformed component, the pressure within the autoclave can be (rapidly) dropped, e.g., from the second pressure to a third or final pressure. The third pressure can be equal to an initial pressure, an intermediate pressure between the first pressure and the second pressure, or a minimum pressure that is below the first pressure. The difference between the second pressure and the third pressure can be selected to achieve a desired expansion ratio, *e.g.,* a ratio of the volume of the foam component to a volume of the preformed component. For example, in some cases, the change in pressure may result in an expansion ratio of between about 1.0 and about 1.2, between about 1.2 and about 1.4, between about 1.4 and about 1.6, between about 1.6 and about 1.8, between about 1.8 and about 2.0, great than about 2.0, or any range therebetween. The change in pressure may occur over a predetermined period of time, or at a predetermined rate. The specific drop or rate in drop of the pressure can be selected to affect a substantially uniform expansion of the preformed component, for example, to create an approximately uniform cell size and material density throughout the resultant foam component. Further, by ensuring substantially uniform expansion, dimensional stability is preserved during expansion, allowing more minute and intricate details, *e.g.,* protrusions, recesses, or textures, that have been formed into the preformed component, to remain intact following expansion. Accordingly, any decorative or performance features that are present on the preformed component are also present on the foam component. In some embodiments, the pressure within the autoclave can be dropped, for example, by controlling the opening of a valve.

In particular, as a result of the drop in pressure, the supercritical fluid contained within the preformed component begins to nucleate and expand, thereby triggering the foaming of the preformed component to form the foam component at step 318. Nucleation of the supercritical fluid forms (closed) supercritical-fluid-filled cells within the preformed component, which expand as the pressure drops and thereby increase the volume of the preformed component. The cells can have an approximately uniform size and distribution throughout the formed foam component. The cell size, *e.g.,* an average cell size, can depend on the specific composition of the polymer that is being expanded and the expansion ratio. Also, because cell size and distribution are approximately uniform, a cell density throughout the foam component is also approximately uniform. Further, the drop in pressure results in a corresponding drop in the temperature of the preformed component. The drop in temperature can reduce the temperature of the preformed component to be below the glass transition temperature, re-solidifying, *e.g.,* crystallizing, the material of the preformed component to form the foam component, thereby forming cells, *i.e.,* pockets, of supercritical fluid, *e.g.,* nitrogen or another blowing agent, in the midsole. Correspondingly, the cells are locked within the foam component to provide high-resilience and cushioning properties for the foam component, while also being lighter and less dense than foam components made with conventional processes. Moreover, due to resolidification of the foam component, the foam component can be at or near final size following removal from the autoclave. In some embodiments, the pockets of supercritical fluid, e.g., nitrogen or another blowing agent in the midsole can remain trapped inside the midsole. In some embodiments, the pockets of supercritical fluid, e.g., nitrogen or another blowing agent, in the midsole are gassed off.

Additionally, because the resultant foam component is at or near final size when it is removed from the autoclave at step 320, the method 300 can eliminate the need for any subsequent compression steps to reduce the foam component to the final, production size. Specifically, in other known supercritical foaming methods, a foam component is typically foamed to an intermediate size, *e.g.,* to an expansion ratio of 2.0, and then placed into a compression mold where the foam component is compressed to reduce the foam component to a final size, *e.g.,* at an expansion ratio of 1.8 the foam component is generally held in the compression mold for a period of time to ensure that the final foam component does not re-expand when removed from the compression mold. The period of time for which the foam component is held under compression varies with temperature, but may generally range between 500 and 550 seconds, leading to increased complexity, cost, and cycle times. Further, compression molding steps generally require that a release agent be applied to the mold to prevent sticking that can damage the parts, but which also makes it more difficult to bond other components to the midsole at later steps. Moreover, compression can cause wrinkling of the outer surface or skin of the foam component, which may remain present in the final part. Eliminating the need to compress the foam component to a final size following the foaming process reduces system cost and complexity. Relatedly, because the foam part is at or near its final size in the autoclave, wrinkling of the outer surface or skin can be reduced or eliminated, and the distribution and size, *i.e*., volume or a largest dimension, of cells remains substantially uniform.

At step 322, the foamed article may be inserted into a processing device such as a computer numerical control device, die-cut machine, or other suitable device for processing the foamed article into shaped sections.

To manufacture a non-recycled midsole member, the method 300 progresses to step 324, where midsole shaped sections may be removed from the foamed article by the processing device of step 322. At step 326, the midsole shaped sections may be molded into non-recycled midsole members.

To manufacture a recycled-midsole member, the foamed article is processed in the recycled foam preparation phase 330 of method 300. During the phase 330, the foamed component is cut, leaving recyclable material which can be processed to create sole components according to the present disclosure. In some embodiments, the recycled foam preparation phase 330 begins after step 320. In some embodiments, the recycled foam preparation phase 330 begins after step 322. In some embodiments, the recycled foam preparation phase 330 begins after step 324.

At step 332, an outside layer of the foam component is removed to create a skinned foam component. In some embodiments, the outside layer is removed by a bladed instrument, knife, hot knife, saw, wire, hot wire, heated instrument or any other method described herein. The exterior of the outside layer of foam will have a closed-cell structure where the cells of the foam are completely enclosed by polymer material. The interior of the outside layer will have an open-cell structure where the cells of the foam are not completely enclosed by polymer material. The outside layer, once removed, is set aside for future use. With the outside layer removed, the skinned foamed component exhibits an open-cell structure on all exposed sides.

At step 334, the skinned foam component is processed into pieces. In some embodiments, the skinned foam component is processed into pieces by a shredder, bladed instrument, knife, hot knife, saw, wire, hot wire, heated instrument or any other method described herein. In some embodiments, the pieces are further broken down until a desirable average particle size, as disclosed herein, is achieved. Once a desired particle size is reached, the pieces are set aside for future use.

At step 336, the outside layer of the foam component is processed into desired portions. In some embodiments, the outside layer is processed into sections by a bladed instrument, knife, hot knife, saw, wire, hot wire, heated instrument or any other method described herein.

During the foamed component preparation phase 340 of method 300, the processed sections and pieces of foamed material created during the foamed component preparation phase 330 are molded together to form a sole component according to the present disclosure.

At step 342, a mold for a component of a sole structure, e.g., a midsole, is provided. The cut portions of the outside layer of the foam component are placed toward a sidewall portion of the mold. In some embodiments, the cut portions of the outside layer are pinned against or attached to the sidewalls of the mold to retain their position prior to molding. In some embodiments, the cut portions of the outside layer are placed or retained on a top and a bottom portion of the mold.

At step 344, the processed pieces of the skinned foam component are added to the mold. In some embodiments, the processed pieces are used to fill the inside of the mold in the space between the cut portions of the outside layer of the foam component.

At step 346, the cut portions of the outside layer of the foam component and the pieces of the skinned foam component are molded together by means of heat and steam. In some embodiments, polymeric binders or other additives are not used, making method 300 more environmentally friendly. In preferred embodiments, binders such as polymeric binders are not used because they prevent the midsole members, as formed by method 300, from being recycled additional times. Binders also negatively influence the performance and consistency of recycled midsole members.

During step 346, a compression molding process is used to create a component of a sole structure, e.g., a midsole. In some embodiments, the compression molding process includes a high temperature, pressure, and steam. In some embodiments, the temperature range is about 110 C to about 160 C. In some embodiments, the total time of the compression molding process is from about 250 seconds to about 500 seconds. In some embodiments, the compression molding process includes a period of heating and period of cooling. In some embodiments, the total period of heating takes from about 100 seconds to about 250 seconds. In some embodiments, the total period of cooling takes from about 100 second to about 300 seconds.

In some embodiments the steam pressure during the compression molding process is from about 0.5 to about 3.0 bar. In one embodiment, the compression molding process takes 340 seconds, with a heating time of 180 seconds, and a cooling time of 150 seconds. In this embodiment, the steam pressure during the compression molding process is preferably 0.95 bar while the temperature is between about 120 C and about 140 C.

At the end of method 300, a midsole member according to the present disclosure is provided. In a preferred embodiment, the sidewall of the midsole member has a clean look instead of a recycled look to improve the aesthetic properties of the midsole member.

Method 300 and the phases and steps therein may be repeated additional times with the same sole components as described herein to provide further recycled components of a sole structure, e.g., a midsole.

As shown in FIGS. 10 and 11, cross-sectional views of two foamed materials manufactured according to the methods of the present disclosure are provided. FIG. 10 displays a first material 400, which is an article made of recycled supercritical foam according to the methods of the present disclosure. FIG. 11 displays a second material 420 which is an article made of a non-recycled supercritical foam.

As shown in FIG. 10, the first material 400 includes a void structure 402, wherein the void structure 402 includes voids of varying sizes. In some embodiments, the voids of the void structure 402 are polygon shaped voids that include a plurality of sides that connect through rounded corners. In some embodiments, the voids are circular, oval, or otherwise differently shaped. The void structure 402 comprises a plurality of large voids 404 and a plurality of small voids 406, such that the small voids 406 fill in the spaces between the large voids 404 and are relatively smaller than the large voids 406. The void structure 402 illustrates an exemplary embodiment of a foam material that comprises voids having shapes of differing sizes. In the illustrated embodiment, the first material 400 is shown in an uncompressed state. During compression of the first material 400, the large voids 404 deform or compress in a direction that a load is applied, which allows for substantial compression of the first material 400.

In some embodiments, each of the large voids 404 and each of the small voids 406 define a widest dimension. In some embodiments, the widest dimension is measured by slicing the void structure 402 in parallel slices along a direction that is parallel to a flat ground surface, each slice representing a cross-section of the void structure 402. The widest dimension of each void in the void structure 402 may be measured using these parallel slices. Similarly, in some embodiments, the widest dimension of each void is measured by slicing the void structure 402 in parallel slices along a direction that is perpendicular to a flat ground surface, each slice representing a cross-section of the void structure 402. Again, the widest dimension of each void in the void structure 402 may be measured using these parallel slices. In some embodiments, the same technique is used, but the parallel slices are taken at an angle that is not parallel or perpendicular to a flat ground surface. In some embodiments, the widest dimension is measured by slicing the void structure 402 in parallel slices along a direction that a load is applied, i.e., in a direction of a downwardly applied force with respect to a flat ground surface when the sole structure is resting on the flat ground surface. Each slice represents a cross-section of the void structure 402. The widest dimension of each void can be measured using these parallel slices. In some embodiments, the large voids 404 of the first material 400 have widest dimensions of between about 50 µm and about 270 µm.

Now referring to FIG. 11, in comparison, the second material 420 also includes a void structure 422 including shaped voids of varying sizes. In some embodiments, the voids of the void structure 422 are polygon shaped voids that include a plurality of sides that connect through rounded corners. In some embodiments, the voids are circular, oval, or otherwise differently shaped. Similar to the first material 400 (see FIG. 10), the void structure 422 of the second material 420 comprises a plurality of large voids 424 and a plurality of small voids 426, such that the small voids 426 fill in the spaces between the large voids 424. In the illustrated embodiment, the second material 420 is shown in an uncompressed state. During compression of the second material 420, the large voids 424 deform or compress in a direction that a load is applied, which allows for substantial compression of the second material 420. In some embodiments, the large voids 424 of the second material 420 have widest dimensions of between about 80 µm and about 260 µm.

The large voids 424 of the second material 420 have generally larger average widest dimensions than the large voids 404 of the first material 400 (see FIG. 10).

In some embodiments, three-dimensional (3D) imaging techniques are used to develop a scale model of the void structures 402, 422. In some embodiments, the 3D imaging techniques include nuclear magnetic resonance imaging (NMRI), magnetic resonance imaging (MRI), micro-computed tomography (mCT), X-ray computerized tomography, a laser sensor, and other imaging techniques. In some embodiments, the widest dimension of the voids in the void structures 402, 422 can be measured using the scale model of the void structures 402, 422. In some embodiments, the scale model of the void structures 402, 422 is processed by an algorithm that calculates the widest dimension of each of the voids in the void structures 402, 422. Using a 3D imaging technique and a computer algorithm to calculate the widest dimension of each void in the void structures 402, 422 is the preferred method of measurement.

With reference to Table 1, Table 2, and Table 3 below, the properties of sole structures made from foam, or a Sole Structure A, a Sole Structure B, a Sole Structure C (compressed), and a Sole Structure C (uncompressed), are compared against a Sole Structure D made from recycled foam according to the disclosure of the present invention. More specifically, each of Sole Structure A, Sole Structure B, Sole Structure C, and Sole Structure D include a midsole made of a foam material.

In some embodiments, Sole Structure A includes a midsole that comprises an aliphatic polyether TPU foam with an ASKER C hardness value of about 25 and a density of about 0.07 g/cm³ to about 0.09 g/cm³. In some embodiments, Sole Structure B includes a midsole that comprises an aliphatic polyester TPU foam with an ASKER C hardness value of about 30 and a density of about 0.09 g/cm³ to about 0.11 g/cm³. In some embodiments, Sole Structure C includes a midsole that comprises an aliphatic polyether TPU foam with an ASKER C hardness value of about 35 and a density of about 0.09 g/cm3 to about 0.11 g/cm³. In some embodiments, Sole Structure D includes a midsole according to the present disclosure.

**Table 1 outlines the density, ball rebound percent, and Asker C hardness of each Sole Structure. The ball rebound percent was measured according to ASTM D 3574. The density was measured according to DIN EN ISO 1183. The ASKER C hardness was measured according to DIN 53505.**

| **Table 1: Comparison of Sole Structures** | | | |
|---|---|---|---|
| **Foam** | **Density (g/cm3)** | **Ball Rebound (%)** | **Asker C Hardness** |
| Sole Structure A | 0.125 | 84.6 | 25.0 |
| Sole Structure B | 0.1075 | 80.1 | 30.0 |
| Sole Structure C (Compressed) | - | - | 35.0 |
| Sole Structure C (Uncompressed) | - | - | 35.0 |
| Sole Structure D | 0.25 | - | 38.0 |

**Table 2 outlines deformation characteristics of each Sole Structure. The deformation characteristics of each Sole Structure were measured with dynamic compression test on a ZWICK LTM3 electro-dynamic testing machine. The dynamic compression test utilized a flat stamp and included 100 cycles with a maximum force of 1500 N at 1.5 Hz. The stiffness (s1) characteristics of each Sole Structure was calculated between 200 N/mm and 400 N/mm as the gradient of the hysteresis curve. The stiffness (s2) characteristics of each Sole Structure was calculated between 1000 N/mm and 1500 N/mm as the gradient of the hysteresis curve.**

| **Table 2: Deformation Characteristics of Sole Structures** | | | | | | |
|---|---|---|---|---|---|---|
| **Foam** | **Material Height (mm)** | **Max Deformation (mm)** | **Max Deformation (%)** | **Stiffness s1** | **Stiffness s2** | **Stiffness Ratio** |
| Sole Structure A | 20.21 | 15.37 | 76.06 | 109.10 | 611.33 | 5.60 |
| Sole Structure B | 21.21 | 15.86 | 74.76 | 81.64 | 460.08 | 5.64 |
| Sole Structure C (Compressed) | 19.11 | 13.75 | 71.96 | 100.43 | 545.96 | 5.44 |
| Sole Structure C (Uncompressed ) | 27.74 | 20.51 | 73.92 | 97.52 | 458.39 | 4.70 |
| Sole Structure D | 26.92 | 18.09 | 67.20 | 67.65 | 396.34 | 5.86 |

**Table 3 outlines energetic characteristics of each Sole Structure. The energetic characteristics of each Sole Structure were measured with a dynamic compression test on a ZWICK LTM3 electro-dynamic testing machine. The dynamic compression test utilized a flat stamp and included 100 cycles with a maximum force of 1500 N at 1.5 Hz. During the dynamic compression test, the amount of energy going into each Sole Structure and the amount of energy returned from each Sole Structure was measured.**

| **Table 3: Energetic Characteristics of Sole Structures** | | | | | |
|---|---|---|---|---|---|
| **Foam** | **Energy in (J)** | **Energy Returned (J)** | **Energy Lost (J)** | **Energy Lost (%)** | **Energy Returned (%)** |
| Sole Structure A | 5.58 | 5.18 | 0.40 | 7.16 | 92.84 |
| Sole Structure B | 6.87 | 6.42 | 0.45 | 6.55 | 93.43 |
| Sole Structure C (Compressed) | 5.92 | 5.30 | 0.62 | 10.49 | 89.51 |
| Sole Structure C (Uncompressed) | 7.66 | 7.15 | 0.51 | 6.62 | 93.38 |
| Sole Structure D | 7.77 | 6.95 | 0.82 | 10.56 | 89.44 |

As shown in Tables 1, 2, and 3, the characteristics of the recycled Sole Structure D are comparable to the non-recycled Sole Structures A, B, and C. Sole Structure D exhibits similar Asker C hardness values, deformation characteristics, stiffness, and energy return percentage values when compared to the non-recycled Sole Structures A, B, and C. As a result, recycled midsole members formed according to the present disclosure perform similarly to non-recycled midsole members.

Compared to Sole Structure A, Sole Structure D has a higher density, higher Asker C hardness value, higher maximum deformation percentage, higher stiffness ratio, and lower energy return percentage.

The density of Sole Structure D is about 100.00% higher than the density of Sole Structure A. The Asker C hardness value of Sole Structure D is about 52.00% higher than the Asker C hardness value of Sole Structure A. The maximum deformation percentage of Sole Structure D is about 8.86% lower than the maximum deformation percentage of Sole Structure A. The stiffness ratio of Sole Structure D is about 4.64% higher than the stiffness ratio of Sole Structure A. The energy return percentage of Sole Structure D is about 3.40% lower than the energy return percentage of Sole Structure A.

Compared to Sole Structure B, Sole Structure D has a higher density, higher Asker C hardness value, lower maximum deformation percentage, higher stiffness ratio, and lower energy return percentage.

The density of Sole Structure D is about 132.55% higher than the density of Sole Structure B. The Asker C hardness value of Sole Structure D is about 26.66% higher than the Asker C hardness value of Sole Structure B. The maximum deformation percentage of Sole Structure D is about 7.56% lower than the maximum deformation percentage of Sole Structure B. The stiffness ratio of Sole Structure D is about 3.90% higher than the stiffness ratio of Sole Structure B. The energy return percentage of Sole Structure D is about 3.99% lower than the energy return percentage of Sole Structure B.

Compared to Sole Structure C (Compressed), Sole Structure D has a higher Asker C hardness value, lower maximum deformation percentage, higher stiffness ratio, and lower energy return percentage.

The Asker C hardness value of Sole Structure D is about 8.57% higher than the Asker C hardness value of Sole Structure C (Compressed). The maximum deformation percentage of Sole Structure D is about 4.76% lower than the maximum deformation percentage of Sole Structure C (Compressed). The stiffness ratio of Sole Structure D is about 7.72% higher than the stiffness ratio of Sole Structure C (Compressed). The energy return percentage of Sole Structure D is about 0.07% lower than the energy return percentage of Sole Structure C (Compressed).

Compared to Sole Structure C (Uncompressed), Sole Structure D has a higher Asker C hardness value, lower maximum deformation percentage, higher stiffness ratio, and lower energy return percentage.

The Asker C hardness value of Sole Structure D is about 8.57% higher than the Asker C hardness value of Sole Structure C (Uncompressed). The maximum deformation percentage of Sole Structure D is about 6.72% lower than the maximum deformation percentage of Sole Structure C (Uncompressed). The stiffness ratio of Sole Structure D is about 24.68% higher than the stiffness ratio of Sole Structure C (Uncompressed). The energy return percentage of Sole Structure D is about 3.94% lower than the energy return percentage of Sole Structure C (Uncompressed).

In some embodiments, a recycled midsole member according to the present disclosure has a higher density, higher Asker C hardness value, lower maximum deformation percentage, higher stiffness ratio, and lower energy return percentage than a non-recycled midsole member.

In some embodiments, a recycled midsole member according to the present disclosure has a density which is about 100.00% to about 132.55% higher than the density of a non-recycled midsole member. In some embodiments, a recycled midsole member according to the present disclosure has an Asker C hardness value which is about 8.57% to about 26.66% higher than the Asker C hardness value of a non-recycled midsole member. In some embodiments, a recycled midsole member according to the present disclosure has a maximum deformation percentage which is about 6.72% to about 8.86% lower than the maximum deformation percentage of a non-recycled midsole member. In some embodiments, a recycled midsole member according to the present disclosure has a stiffness ratio which is about 3.90% to about 24.68% higher than the stiffness ratio of a non-recycled midsole member. In some embodiments, a recycled midsole member according to the present disclosure has an energy return percentage which is about 0.07% to about 3.99% lower than the energy return percentage of a non-recycled midsole member.

Any of the embodiments described herein may be modified to include any of the structures or methodologies disclosed in connection with different embodiments. Further, the present disclosure is not limited to articles of footwear of the type specifically shown. Still further, aspects of the articles of footwear of any of the embodiments disclosed herein may be modified to work with any type of footwear, apparel, or other athletic equipment.

As noted previously, it will be appreciated by those skilled in the art that while the disclosure has been described above in connection with particular embodiments and examples, the disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the disclosure are set forth in the following claims.

### INDUSTRIAL APPLICABILITY

Numerous modifications to the present disclosure will be apparent to those skilled in the art in view of the foregoing description. Accordingly, this description is to be construed as illustrative only and is presented for the purpose of enabling those skilled in the art to make and use the invention. The exclusive rights to all modifications which come within the scope of the appended claims are reserved.

## Claims

1. A method for manufacturing a midsole member (200) for an article of footwear (100), comprising:
fabricating a polymer sheet to form a preformed component;
positioning the preformed component within a cavity of an autoclave;
saturating the preformed component with a supercritical fluid;
dropping the pressure within the cavity of the autoclave to trigger foaming of the preformed component to form a foam component; and
removing the foam component from the autoclave;
removing an outer layer of the foam component to provide the outer layer and a skinned foamed component;
processing the skinned foamed component into pieces (232);
providing a mold;
processing the outer layer into one or more sections;
placing the one or more sections of the outer layer into a perimeter of the mold;
filling the remainder of the mold with one or more processed pieces (232) of the skinned foam component; and
molding the sections and pieces (232) together to provide a midsole member (200) for an article of footwear (100),
wherein the midsole member (200) comprises a first portion (210) and a second portion (230), and
wherein the first portion (210) comprises one or more sections of the outer layer of the foamed component and wherein the second portion (230) comprises one or more pieces (232) of the processed skinned foam component.

2. The method of claim 1, wherein the processed pieces of the second material, prior to the molding step, have an average volume of about 0.1 cm³ to about 2 cm³.

3. The method of claim 1 or 2, wherein the first portion (210) and second portion (230) are compression molded without the use of polymeric binders.

4. The method of at least one of the preceding claims, wherein the second portion (230) of the midsole member (200) has an open-cell foam structure.

5. The method of claim 4, wherein the open-cell structure of the second portion (230) comprises a void structure (402) with a plurality of voids (404, 406), and
wherein plurality of voids (404, 406) comprises voids (404) with a widest dimension of about 50 µm to about 270 µm.

6. The method of at least one of the preceding claims, wherein the midsole member (200) further comprises a forefoot region (120), a midfoot region (122), and a heel region (124), and
wherein the average volume of the pieces (232) of the second portion (230) are different between two or more of the forefoot (120), midfoot (122), and heel regions (124).

7. The method of at least one of the preceding claims, wherein the first portion (210) of the midsole member (200) encapsulates the second portion (230).

8. The method of at least one of the preceding claims, wherein the material inserted into the mold consists essentially of the first foamed polymer material and the second foamed polymer material.

9. A midsole member (200) for an article of footwear (100) comprising:
a first portion (210) and a second portion (230),
wherein the first portion (210) is positioned around a perimeter of the midsole member (200) and comprises a first foamed polymer material, and the first foamed material comprises one or more sections of foam made through supercritical foaming,
wherein the second portion (230) is positioned in-between the perimeter of the midsole member (200) defined by the first portion (210) and comprises a second foamed polymer material, and the second foamed material comprises a plurality of pieces (232) of foam made through supercritical foaming,
wherein the first portion (210) comprises a first side (216) and a second side (218), and
wherein the first side (216) is an external side with a closed-cell foam structure and the second side (218) is an internal side with an open-cell foam structure.

10. The midsole member (200) of claim 9, wherein the first portion (210) and second portion (230) do not include polymeric binders.

11. The midsole member (200) of claim 9 or 10, wherein the second portion (230) of the midsole member (200) comprises a surface (250), and
wherein the pieces (232) of the second portion (230) exposed on the surface (250) of the second portion (230) have an open-cell structure.

12. The midsole member (200) of claim 11, wherein the open-cell structure comprises a void structure (402) with a plurality of voids (404, 406), and
wherein the plurality of voids (402) comprises voids (404) with a widest dimension of about 50 µm to about 270 µm.

13. The midsole member (200) of at least one of the claims 9 to 12, wherein the first portion (210) of the midsole member (200) encapsulates the second portion (230).

14. The midsole member (200) of at least one of the claims 9 to 13, wherein the midsole member (200) consists essentially of the first foamed polymer material and the second foamed polymer material.

15. The midsole member (200) of at least one of the claims 9 to 14, wherein the second portion (230) has an external surface (250) comprising one or more recesses (252) between the plurality of pieces (232), and
wherein the one or more recesses (252) have an average depth of about 0.1 mm to about 5 mm.
